# EUROPEAN PATENT APPLICATION

(11) **EP 1 211 790 A2**
(43) Date of publication of application: **05.06.2002**
(21) Application number: 01127472.7
(22) Date of filing: 28.11.2001
(51) Int. Cl.: H02M 3/07

(54) **Integrated semiconductor circuit**

(30) Priority: 01.12.2000 DE 10059643
(71) Applicant: TEXAS INSTRUMENTS DEUTSCHLAND GMBH, 85356 Freising (DE)
(72) Inventor: Wawrzyniak, Klaus, 85416 Langenbach (DE); Sandner, Harald, 85417 Marzling (DE); Wiemann, Frank, 85356 Freising (DE)
(74) Representative: Schwepfinger, Karl-Heinz, Dipl.-Ing.

(57) **Abstract**

An integrated semiconductor circuit contains a voltage multiplier circuit (10) which from a supply voltage applied to the integrated circuit generates an operating voltage higher than this, for the circuit components (16) contained in the semiconductor circuit. An activating circuit (22) generates an activating signal when the supply voltage is applied, which puts the circuit components into a defined active state. A comparator (24) matches a comparison voltage, which is in a defined relationship to the output voltage of the voltage multiplier circuit (10), to a reference voltage. This outputs a switching signal as soon as the comparison voltage reaches the reference voltage. A switching element (22) passes on the activating signal to the circuit components (16) only when it receives the switching signal.

## Description

The invention relates to an integrated semiconductor circuit with a voltage multiplier circuit which from the supply voltage applied to the integrated circuit generates an operating voltage higher than this, for the circuit components contained in the semiconductor circuit, and with an activating circuit which generates an activating signal when the supply voltage is applied, which puts the circuit components into a defined active state.

Integrated semiconductor circuits in small portable electronic devices, such as mobile telephones, usually receive their supply voltage in the form of the output voltage of a battery. This voltage, however, is normally lower than the operating voltage required by the individual circuit components within the semiconductor circuits. The semiconductor circuits therefore contain voltage multiplier circuits which raise the supply voltage applied to the required higher operating voltage value. The circuit components in the integrated semiconductor circuit can only become operational once the output voltage of the voltage multiplier circuit has reached its operational level, and when they have received an activating signal from an activating circuit which is also contained within the integrated semiconductor circuit. This activating circuit supplies an activating signal to the individual circuit components as soon as the supply voltage is applied to the integrated semiconductor circuit, and this activating signal ensures that the individual circuit components assume a defined initial state.

Since the individual circuit components are put into their defined active initial state by the activating circuit as soon as the supply voltage is applied to the integrated semiconductor circuit, they will act as a load at the output of the voltage multiplier circuit from that point in time. The load current to be supplied by the voltage multiplier circuit for this reason is the cause of a delay in the rise of the operating voltage at the output of the voltage multiplier circuit. This delay then has as a consequence that the individual circuit components can fulfil their assigned operational duties only after a certain delay, that is when the output voltage of the voltage multiplier circuit has reached its operating voltage level. This delay of the commencement of operational readiness of the individual circuit components constitutes a disadvantage in many application cases.

The invention rests on the requirement of providing an integrated semiconductor circuit of the type indicated above, where the transition from the passive state into the active state can be significantly speeded up.

This requirement is satisfied in an integrated semiconductor circuit of the type described above by the use of a comparator that matches a comparison voltage, in a defined relationship with the output voltage of the voltage multiplier circuit, to a reference voltage, and which outputs a switching signal as soon as this comparison voltage reaches the reference voltage level, and of a switching element which passes on the activating signal to the circuit components only when it receives the switching signal.

The semiconductor circuit according to the invention prevents a load current from being taken up by the individual circuit units immediately after the supply voltage is applied, to enable the now unloaded voltage multiplier circuit to generate the raised operating voltage from the supply voltage in the fastest possible time. This operating voltage level will be reached very quickly, and only when this voltage level is detected, will the circuit units be put into their active state and then draw a load current from the voltage multiplier circuit. This design development is instrumental in substantially speeding up the change from a quiescent to an active state of the integrated semiconductor circuit.

Advantageous further developments of the invention are indicated in the sub-claims.

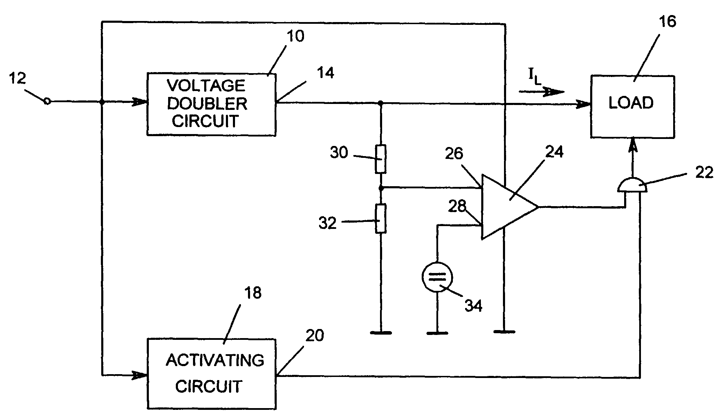

The invention shall now be explained, in exemplified form, by making reference to the drawing, the only figure of which showing a schematic circuit diagram of the integrated semiconductor circuit according to the invention.

As can be seen in the drawing, the integrated semiconductor circuit contains a voltage doubler circuit 10 which increases the value of the supply voltage applied to the input 12 to double this value at the output 14. This voltage as present at the output 14 constitutes the operating voltage for the circuit units comprising the integrated semiconductor circuit, which make up the load 16 and are represented together as a block in the drawing.

An activating circuit 18, on application of the supply voltage to the input 12, outputs an activating signal at its output 20, which is applied to an input of an AND circuit 22. The other input of this AND circuit 22 receives the output signal of a comparator 24 which compares the voltages applied to its inputs 26 and 28 and supplies an output signal to the AND circuit 22 as soon as it has established that both the voltages are equal.

The voltage applied to the input 26 of the comparator 24 is in a defined relationship to the operating voltage at the output 14 of the voltage doubler circuit 10. This fixed relationship is established by means of a potential divider consisting of two resistors 30 and 32, arranged in series between the output 14 of the voltage doubler circuit 10 and the ground rail. The input 26 is connected to the tap of the potential divider consisting of these two resistors 30, 32. The output voltage of a reference voltage source 34, which may be a band gap reference source, for example, is applied to the input 28 of the comparator 24. The ratio of the two resistors 30, 32 is set so that the voltage at the input 26 becomes equal to the voltage at the input 28, as soon as the voltage at the output 14 of the voltage doubler circuit 10 reaches its operating voltage level.

The function of the circuit described is as follows:

As soon as the supply voltage is applied to the input 12, the voltage at the output 14 of the voltage doubler circuit 10 begins to rise. At the same time, the activating circuit 18 outputs an activating signal at its output 20, which is applied to one of the inputs of the AND circuit 22. Since the voltage at the input 26 of the comparator 24 is, for the time, still lower than the reference voltage at the input 28, the comparator 24 will not yet output a signal indicating that the voltages applied to it have become equal. The activating signal from the activating circuit 18 therefore cannot yet reach the load 16 and, in consequence, no load current I_{L} can flow to the load. This means that the voltage doubler circuit 10, on account of its unloaded output, can very quickly raise the voltage value at its output 14 to that of the operating voltage. As soon as the operating voltage value is reached, the comparator 24 detects the equality of the voltage values fed to its inputs 26, 28 and outputs a corresponding signal to the AND circuit 22, causing this to allow the activating signal output by the activating circuit 18 to flow to the load. The load is thereby put into its active state. It is only from this point in time that the load current I_{L} is allowed to flow. The flow of this current therefore only commences when the voltage doubler circuit 10 has already raised its output voltage to the level of the operating voltage. Whilst in an unloaded state, the voltage doubler circuit 10 is able to raise its output voltage in a very short time, so that the activation of the load 16 can take place very shortly after application of the supply voltage to the input 12.

In a practical example a voltage of 1.8 V is applied to the supply voltage terminal 12, which is then raised to a value of 3.6 V by the voltage doubler circuit 10. The band gap reference source 34 applies a voltage of 1.2 V to the input 28, and the resistors 30 and 32 are dimensioned such as to ensure that the voltage at the input 26 is also 1.2 V when a voltage of 3.6 V is present at the output 14. Instead of the voltage from the source 34 it is also possible to apply the supply voltage from input 12 to the input 28. This would only require the resistors 30 and 32 of the potential divider to be differently dimensioned.

## Claims

1. Integrated semiconductor circuit with a voltage multiplier circuit which from the supply voltage applied to the integrated circuit generates an operating voltage higher than this, for the circuit components contained in the semiconductor circuit, and an activating circuit which generates an activating signal when the supply voltage is applied, which puts the circuit components into a defined active state, **characterised by** a comparator (24) that matches a comparison voltage, which is in a defined relationship to the output voltage of the voltage multiplier circuit (10), to a reference voltage, and which outputs a switching signal as soon as this comparison voltage reaches the reference voltage level, and by a switching element (22) which passes on the activating signal to the circuit components (16) only when it receives the switching signal.

2. Integrated semiconductor circuit according to claim 1, where the comparison voltage is related to the output voltage of the voltage multiplier circuit in such a way that it becomes equal to the reference voltage when the voltage multiplier circuit (10) can supply the raised operating voltage.

3. Integrated semiconductor circuit according to claim 1, where the voltage multiplier circuit (10) doubles the supply voltage and where the reference voltage is the output voltage of a band gap circuit (34) or the supply voltage itself.
